## Europäisches Patentamt
## European Patent Office
## Office européen des brevets

⑱

(11) Publication number: **0 083 073**
**B1**

(12) **EUROPEAN PATENT SPECIFICATION**

(45) Date of publication of patent specification: **18.10.89**

(21) Application number: **82111903.9**

(22) Date of filing: **22.12.82**

(51) Int. Cl.⁴: **C 08 F 10/00, C 08 F 4/64**

(54) New catalyst components for the polymerization of alpha-olefins and catalysts obtained therefrom.

(30) Priority: **24.12.81 IT 2584181**

(43) Date of publication of application:
**06.07.83 Bulletin 83/27**

(45) Publication of the grant of the patent:
**18.10.89 Bulletin 89/42**

(84) Designated Contracting States:
**AT BE DE FR GB IT NL SE**

(56) References cited:
**EP-A-0 018 737**
**FR-A-2 428 056**
**US-A-3 953 414**
**US-A-4 218 339**

(73) Proprietor: **Montedison S.p.A.**
**31, Foro Buonaparte**
**I-20121 Milan (IT)**

(72) Inventor: **Cuffiani, Illaro**
**33, Via Bagaro**
**Ferrara (IT)**
Inventor: **Longi, Paolo, Dr.**
**5, Via Inama**
**Milan (IT)**
Inventor: **Zucchini, Umberto**
**11, Via G. Leopardi**
**Ferrara (IT)**
Inventor: **Pennini, Gianni, Dr.**
**190, Via Ladino**
**Porotto Ferrara (IT)**

(74) Representative: **Zumstein, Fritz jun., Dr. et al**
**Dr. F. Zumstein sen. Dr. E. Assmann Dr. R.**
**Koenigsberger Dipl.-Ing. F. Klingseisen Dr. F.**
**Zumstein jun. Bräuhausstrasse 4**
**D-8000 München 2 (DE)**

Courier Press, Leamington Spa, England.

**Description**

The invention refers to a process for preparing solid components of catalysts for the polymerization of alpha olefins $CH_2=CHR$, wherein R is an alkyl radical containing from 1 to 6 carbon atoms, and mixtures thereof with minor amounts of ethylene, which comprises subjecting emultions or dispersions in an inert liquid medium or in an inert gas phase of a liquid phase, comprising either (a) compounds or compositions containing Ti and Mg compounds that are immiscible in aliphatic hydrocarbons, or (b) precursors of the catalytic components that are immiscible in aliphatic hydrocarbons, to transformation reactions of the dispersed liquid phase to a solid phase comprising a Mg halide supporting a Ti compound. The invention is particularly directed to the preparation of catalysts for the polymerisation of propylene, or of mixtures thereof with minor amounts of ethylene.

It is known that the coordination catalysts commonly used in the industrial practice are heterogeneous systems obtained by reaction of a transition metal compound (generally a Ti halide) with an organometal compound of the metals of Groups I—III of the Periodic System.

The transition metal compound used for the preparation of the catalyst is generally a solid insoluble in the hydrocarbon polymerization medium or is a liquid soluble in said medium.

Homogeneous coordination catalysts (soluble in the polymerization medium at least before the polymerization is started) are also known.

These systems, however, have not been adopted in the industrial practice because of the fact that the activity thereof, that at the beginning is also very high, decreased rapidly and this does not allow to obtain high polymer yields.

Within the field of heterogeneous catalysts, supported catalysts have been adopted in the industrial practice already since some time, which are endowed with so high activity as to allow to avoid the expensive depuration treatments of the polymer from the catalytic residues. These catalysts are generally obtained from a catalystic component comprising a titanium compound supported on a magnesium halide in active form.

Catalysts supported on Mg halides endowed with both high activity and stereospecificity that are suitable for the stereoregular polymerization of propylene and similar alpha-olefins are also known. These catalysts comprise in general a titanium compound supported on a Mg halide in active form, modified with electron-donor compounds.

In the modern industrial processes using "high yield" supported catalysts the requirement is felt of being in the position to have available catalysts having a controlled morphology and particle size, which are capable to yield a polymer in form of particles which maintain the morphology and the particle size of the catalyst and which, furthermore, are endowed with a high flowability and bulk density.

A catalyst having these characteristics shows advantages not only during the polymerization and makes easier the subsequent operations of transfer and/or treatment of the polymer but can also allow to eliminate the granulation step of the polymer, this operation being one that, as it is known, requires large amounts of energy.

The methods employed until now for the preparation of catalysts having a controlled morphology and/ or particle size are based on operations expensive per se, which comprise the preformation of a precursor of the catalytic component in form of particles having a controlled morphology and the subsequent transformation of these particles to obtain the true catalytic component or the precipitation of the catalytic component in conditions in general very critical, followed by the operations of separation, washing and drying of the solid.

According to other methods, precursors of the catalytic component in the melted state are emulsified in an inert immiscible liquid and the emulsion is then subjected to quenching to obtain the solidification of the dispersed liquid phase which is subsequently treated for the transformation thereof in the catalytic component.

Examples of these methods are described in the applicant's US—A—3,953,414 and BE—A—878,347. In US—A—3,953,414 also solid components comprising Mg halide supporting a Ti compound are described. Further it is known from EP—A—18737 that emulsions may be transformed into dispersions by quenching the emulsion.

Coordination catalysts are now known hitherto wherein the component comprising the transition metal compound, consisting of a liquid immiscible in the conventional solvents used in the polymerization processes, are employed in emulsion and dispersion form in said liquid medium.

It has been now unexpectedly found that it is possible to obtain catalysts suitable to produce crystalline polymers of the alpha-olefins defined above and crystalline copolymers thereof with minor amounts of ethylene, in the form of particles having controlled morphology and/or particle size, by carrying out the preparation of the catalytic component comprising the transition metal compound by starting from emulsions or dispersions of a liquid phase in an inert liquid medium or in an inert gas phase said liquid phase comprising compounds or compositions containing Ti and Mg compounds that are immiscible in the normal aliphatic hydrocarbons or comprising a precursor of the catalytic component which is also immiscible in the aliphatic hydrocarbons.

The transformation of the above indicated emulsions or dispersions in the catalytic component having controlled morphology and/or particle size takes place by reactions which involve the formation of a solid

2

phase comprising a titanium compound supported on a magnesium halide.

Preferably and in order to endow the catalyst with a higher stereospecificity, it is worked under conditions wherein the solid phase obtained by transformation of the dispersed liquid phase comprises also an electron-donor compound.

Electron-donor compounds suitable for this purpose are well known in the literature.

As example can be cited the compounds described in the applicant's US—A—4,107,414 and US—A—4,107,418. Other examples are described in the applicant's EP—A—45 975, EP—A—45 976 and EP—A—75 977.

Any reaction that leads to the formation of a solid phase comprising a titanium compound supported on a magnesium halide is suitable for the transformation of the above described emulsions or dispersions.

Examples of known reactions are those wherein the Ti and Mg components forming the dispersed liquid phase are made to react with an Al-alkyl compound having formula $AlR_mX_n$ wherein R is an alkyl, cycloalkyl or aryl radical containing from 1 to 18 carbon atoms; X is a halogen; m is a number comprised between 1 and 3; n is a number comprised between zero and 2.

According to other methods, the Ti and Mg compounds comprising also an Al halide are made to react with compounds such as for example diisoamyl ether, alkyl-arylether such as for example anisol that are capable of forming complexes with the Al halide but not with the Mg halide.

As already indicated, any compound or composition comprising Ti and Mg compounds that is immiscible in aliphatic hydrocarbons is suitable for the formation of emulsions or dispersions employable for the preparation of the catalytic components according to the invention.

Similarly, any precursor of the catalytic components that in the liquid state is immiscible in aliphatic hydrocarbons is suitable for the preparation of the emulsions or dispersions from which the catalytic component is obtained.

Examples of compounds or compositions and methods of preparation thereof, that are suitable for obtaining the emulsions and suspensions are as follows.

Anhydrous magnesium halide, in particular $MgCl_2$, is made to react with an anhydrous aluminum halide, in particular $AlCl_3$, in an aromatic hydrocarbon, in particular toluene, in the presence of a halogenated hydrocarbon, preferably 1,2-dichloroethane. To the oily liquid thus obtained (now immiscible in the same aromatic hydrocarbon) a titanium compound, in particular $TiCl_4$, is added. An oily liquid is obtained that is immiscible in the common aliphatic hydrocarbons.

More particularly, the Mg and Al halides and the aromatic hydrocarbons are made to react at the reflux temperature of the aromatic hydrocarbon in the Mg/Al/toluene molar ratio of 1:3:12.

To this suspension the halogenated hydrocarbon is added in the ratio of about 2 mols per mol of Mg halide and it is heated until an oily liquid is formed. Then the Ti compound is added in a Ti halide/Mg halide molar ratio comprised in general between 0.1:1 and 1:1.

The oily liquid that is obtained before the addition of the Ti compound is in itself a precursor of the catalytic component that can be emulsified and the emulsion can be treated for the transformation to catalytic component.

In the above indicated preparation the Al trihalide can be substituted by an alkyl Al dihalide, the toluene by benzene, xylene and by similar aromatic hydrocarbons; 1,2-dichloroethane can be substituted by $C_2H_5Cl$, $C_3H_7Cl$, n-$C_4H_9Cl$, s-$C_4H_9Cl$, t-$C_4H_9Cl$, $C_6H_5Cl$, $CHCl_3$, $C_6H_5CH_2Cl$, $CH_2Cl_2$ and by similar alkyl or aryl halides.

Another method of preparation consists of dissolving an anhydrous Mg halide in a Ti tetraalcoholate, in particular Ti tetrabutylate and of making an anhydrous gaseous hydrohalogenic acid to flow in the solution until separation of an oily phase.

According to a modification of the above described method, the hydrohalogenic acid can be replaced by an acyl halide, in particular acetyl chloride. The butyl acetate that is formed is partly removed until formation of an oily liquid.

Other compounds suitable for the preparation of the emulsions or suspensions from which the catalytic components are obtained according to the invention, can be selected from the compounds having the formula:

$$MgX_2 \cdot TiX_pY_q \cdot n\ ED$$

which in the liquid state are immiscible in aliphatic hydrocarbons. In the formula X is a halogen atom; Y is a OR radical in which R is an alkyl, cycloalkyl or aryl group containing from 1 to 18 carbon atoms; p is a number from 1 to 4; q is a number from zero to 3; p + q = 4; n is a number from 3 to 6; ED is an electron-donor compounds selected in particular from the esters of carboxylic aliphatic or aromatic acids.

Examples of these compounds are: $MgCl_2.TiCl_4.4$ Ac (Ac = $CH_3COOC_2H_5$), $MgCl_2.TiCl_4$ EB (EB = ethylbenzoate), $MgCl_2.TiCl_2(OC_2H_5)_2.4\ C_2H_5OH$, $MgCl_2.TiCl_4.5\ POCl_3$.

These compounds are prepared according to known methods, by dissolving the Mg halide in the ED compound, by adding to the solution the stoichiometric amount of the Ti compounds and by then causing the reaction to take place at reflux. The excess of ED compound is at the end removed by evaporation.

The precursors of the catalytic components are selected in general from the adducts of the Mg halides comprising an electron-donor compound, in particular an aliphatic, cycloaliphatic or alkylaryl alcohol.

3

Adducts of this type and the methods of preparation thereof are known in the literature. These adducts are in general solids at room temperature but have a relatively low melting point.

They are emulsified, in the liquid state, in an inert liquid; the emulsion is than made to react, according to known methods, with reagents capable of transforming the adduct in the active catalytic component.

Examples of transformation reactions to the catalytic component are those wherein the adduct is made to react directly with $TiCl_4$ or, before the reaction with $TiCl_4$, is made to react with an Al-alkyl compound or with halogenated silicon compounds such as $SiCl_4$ and halosilanes. These and other reactions are described in BE—A—857,574 and BE—A—878,347.

In order to improve the stereospecificity of the catalyst, the reactions are carried out in the presence of an electron-donor compound capable of forming adducts with the Mg halide.

The emulsifying of the liquid Ti compounds as well as of the precursors can be carried out according to known techniques. Preferably the transition metal compound is dispersed into an oil of paraffinic, naphthenic, aromatic or siliconic type and then subjected to the transformation reactions.

Examples of these oils are silicon oil Baysilon M 100® (Bayer), vaselin OB 55® (ROL), Cortis OB 55® oil (Total), Circosol 2XH® oil (Sunoco) and Dutrex R 55® oil (Shell).

In some cases, in particular when the emulsions were unstable in the time, it has been found convenient to prepolymerize small amounts of ethylene or other olefin. The prepolymerization is carried out in general until a few grams of polymer (1—100 g) per gram of catalytic component are formed.

The obtained prepolymer is then treated with an ether solution in an aromatic hydrocarbon in order to obtain the active catalytic component.

In some cases it proved convenient to cause the adsorption of the immiscible liquid phase used for the preparation of the emulsions or dispersions, to take place on a porous inert support having predetermined geometric form and/or particle size distribution. The solid is then suspended in an inert liquid medium, that is immiscible with the adsorbed liquid phase and the suspension is then treated for the transformation to the catalytic component.

The co-catalysts usable with the catalytic components of the invention to obtain the catalysts for the polymerization, according to known methods, of alpha-olefins and of mixtures thereof with minor amounts of ethylene comprise Al-alkyl compounds such as Al-trialkyl, hydrides of Al-alkyl and, preferably, electron-donor compounds which, as it is known, improve the stereospecific characteristics of the catalytic system. Examples of Al-alkyl compounds are Al-triethyl, Al-triisobutyl, Al-tri-n-butyl.

## Examples 1—4

1) *Preparation of emulsifiable liquid A.*

The emulsifiable liquid employed in all examples 1—4 was prepared in the following conditions and modalities. 44.07 g of anhydrous $MgCl_2$, 199 g of anhydrous $AlCl_3$, 640 cm³ of anhydrous toluene and 80 cm³ of dehydrated 1,2-dichloroethane were introduced into a flask fitted with stirrer, dropping funnel, reflux condenser and thermometer, after previously flushing with nitrogen. The suspension was heated to 110°C and maintained at this temperature for 2 hours. The suspension was then cooled to room temperature and filtered: 765 cm³ of a red-brownish oily liquid were obtained.

2) *Emulsifying of liquid A.*

The device for the emulsifying of liquid A comprised a Keller type flask fitted with dropping funnel and theremometer, in which a turbostirrer turning at a speed of 12,000 r.p.m. was inserted.

The control of the temperature was carried out by immersion of the flask in a methanol/dry ice cooling system. Silicon oil (Baysilon M 100® Bayer) and n-butylether were introduced into the flask, after a previous flushing thereof with nitrogen. Then liquid A (to which $TiCl_4$ was previously added) was fed under the highest stirring while cooling simultaneously, within 5 minutes and while maintaining the temperature at the desired value. The stirring was continued for another 10 minutes. The data of the preparation are reported in Table 1.

3) *Reaction with $Al(C_2H_5)_3$ and prepolymerization.*

The whole volume of the emulsion prepared in 2) was transferred within the time of about 3 minutes to a flask fitted with dropping funnel and thermoregulated, wherein a 500 cm³ hexane solution containing each time the amount of $Al(C_2H_5)_3$ (TEA) equal to the Al/Ti ratio reported in Table 1 was previously introduced. The reaction temperature is also reported in Table 1. In the resulting suspension ethylene was flowed for a few minutes in order to remove nitrogen and then the flask was pressurized with ethylene at an over-pressure of $2.66—7.98 \cdot 10^3$ Pa, for a time of 30 minutes. A prepolymer was recovered that was then washed with hexane and dried under vacuum at 50°C for 3 hours.

4) *Polymerization of propylene.*

The polymerization tests were carried out in a 2.5 liter autoclave fitted with stirrer and thermocouple. 1000 cm³ of an hexane suspension containing the amounts of Al-triethyl and phenyltriethoxysilane (FES) indicated in Table 2 were introduced under nitrogen atmosphere into the autoclave previously heated at 60°C.

The autoclave was then closed, hydrogen was introduced up to a pressure of 0.02 MPa, the

4

temperature was increased to 70°C and propylene was introduced up to a pressure of 0.7 MPa. The pressure was maintained constant during the polymerization by feeding the monomer continuously. After 4 hours the test was interrupted; the solid polymer was separated from the solvent by filtration and then dried under a nitrogen flow at 70°C. In all tests the polymer was present in form of particles having a controlled morphology and particle size. The performance of the catalyst and other characteristics of the polymer are reported in Table 2.

The isotacticity index reported in Table 2 is related to a polymer insoluble in the polymerization medium.

EP 0 083 073 B1

TABLE 1

| Example | Emulsifying | | | | Reaction with AlEt$_3$ | | | Percent composition prepolymer (% by weight) | | |
|---|---|---|---|---|---|---|---|---|---|---|
| | | | Emulsifiable liquid | | | | | | | |
| | Sil. oil (cm$^3$) | n-butyl ether (cm$^3$) | Liquid A (cm$^3$) | TiCl (cm$^3$) | Al/Ti | Tempera-ture °C | Prepolymer weight (g) | Ti | Mg | Cl |
| 1 | 50 | 2.9 | 50 | 1.85 | 6 | 60 | 5.9 | 8,5 | 8.7 | 40.15 |
| 2 | 80 | 6 | 80 | 3.0 | 4.5 | 50 | 28.8 | 2.95 | 5.9 | 19.5 |
| 3 | 100 | 7.5 | 100 | 1.0 | 8 | 50 | 13.1 | 2.45 | 9.1 | 35.9 |
| 4 | 100 | 7.5 | 100 | 1 | 11 | 40 | 10.2 | 3.5 | 6.4 | 29.8 |

TABLE 2

| Example | Catalytic component (g) | AlEt$_3$ (mMols) | FES (mMols) | Yield (g.polymer/g Ti) | Isotactic index (%) | [η] (dl/g) |
|---|---|---|---|---|---|---|
| 1 | 0.148 | 5 | 0.25 | 6,000 | 91.5 | 1.3 |
| 2 | 0.240 | 5 | 0.25 | 5,200 | 93 | 1.1 |
| 3 | 0.203 | 5 | 0.25 | 12,700 | 93 | 1.28 |
| 4 | 0.238 | 5 | 0.25 | 2,500 | 91.6 | 1.3 |

Example 5

4 g of prepolymerized catalytic component obtained according to example 3 were added to 25 cm³ toluene containing dissolved 0.0088 M of anisol. The suspension was heated at 60°C for 3 hours.

Then it was cooled to room temperature and filtered; the solid was washed with n-heptane and dried under vacuum at 50°C for 3 hours.

0.2 g of the solid were used in a polymerization test carried out in the conditions of examples 1—4. 157 g of polymer were obtained, of which the fraction insoluble in the polymerization medium is in form of particles having controlled particle size, with the size comprised mainly between 500 and 1000 micron.

**Claim**

1. Process for preparing solid components of catalysts for the polymerization of alpha olefins $CH_2=CHR$, wherein R is an alkyl radical containing from 1 to 6 carbon atoms, and mixtures thereof with minor amounts of ethylene, which comprises subjecting emulsions or dispersions of a liquid phase in an inert liquid medium or in an inert gas phase said liquid phase comprising either (a) compounds or compositions containing Ti and Mg compounds that are immiscible in aliphatic hydrocarbons, or (b) precursors of the catalytic components that are immiscible in aliphatic hydrocarbons, to transformation reactions of the dispersed liquid phase to a solid phase comprising a Mg halide supporting a Ti compound.

**Patentanspruch**

1. Verfahren zur Herstellung fester Katalysatorkomponenten für die Polymerisation von Alphaolefinen $CH_2=CHR$, worin R für einen Alkylrest mit 1 bis 6 Kohlenstoffatomen steht, und von deren Mischungen mit geringeren Mengen Ethylen, umfassend das Unterwerfen von Emulsionen oder Dispersionen einer flüssigen Phase in eineminerten flüssigen Medium oder in einer Inertgasphase dieser flüssigen Phase, enthaltend entweder (a) Verbindungen oder Zusammensetzungen, die in aliphatischen Kohlenwasserstoffen nicht mischbare Ti-und Mg-Verbindungen enthalten, oder (b) Vorläufer katalytischer Komponenten, die in aliphatischen Kohlenwasserstoffen nicht mischbar sind, Umwandlungsreaktionen der dispergierten flüssigen Phase in eine feste Phase, die ein für eine Ti-Verbindung als Träger dienendes Mg-Halogenid enthält.

**Revendication**

1. Procédé de préparation de constituants solides de catalyseurs pour la polymérisation d'alpha oléfines $CH_2=CHR$, où R est un radical alkyle contenant 1 à 6 atomes de carbone, et de leur mélange avec des faibles proportions d'éthylène, ce procédé consistant à soumettre des émulsions ou dispersions d'une phase liquide dans un milieu liquide inerte ou dans une phase gazeuse inerte, ladite phase liquide comprenant soit:

a) des composés ou compositions contenant des composés à base de Ti et Mg qui sont immiscibles dans les hydrocarbures aliphatiques, ou

b) des précurseurs des constituants catalytiques qui sont immiscibles dans les hydrocarbures aliphatiques, pour des réactions de transformation de la phase liquide dispersée en une phase solide comprenant un halogénure de magnésium constituant un support d'un composé du titane.